(19) Europäisches Patentamt
European Patent Office
Office européen des brevets

(11) **EP 3 030 474 B1**

(12) **EUROPÄISCHE PATENTSCHRIFT**

(45) Veröffentlichungstag und Bekanntmachung des Hinweises auf die Patenterteilung:
**10.11.2021 Patentblatt 2021/45**

(21) Anmeldenummer: **14758484.1**

(22) Anmeldetag: **01.08.2014**

(51) Int Cl.:
**B62D 7/14** *(2006.01)*     **G01B 21/10** *(2006.01)*
**G01B 21/24** *(2006.01)*     **G01B 21/26** *(2006.01)*

(86) Internationale Anmeldenummer:
**PCT/DE2014/100282**

(87) Internationale Veröffentlichungsnummer:
**WO 2015/018396 (12.02.2015 Gazette 2015/06)**

(54) **VORRICHTUNG UND VERFAHREN ZUR MESSUNG UND ERMITTLUNG RELEVANTER PARAMETER FÜR DIE EINSTELLUNG DER FAHRTRICHTUNGEN ZWEIER LENKBARER ACHSEN EINES FAHRZEUGS RELATIV ZUEINANDER**

DEVICE AND METHOD FOR MEASURING AND DETERMINING RELEVANT PARAMETERS FOR THE ADJUSTMENT OF THE DIRECTIONS OF TRAVEL OF TWO STEERABLE AXLES OF A VEHICLE IN RELATION TO EACH OTHER

DISPOSITIF ET PROCÉDÉ DE MESURE ET DE DÉTERMINATION DE PARAMÈTRES PERTINENTS POUR RÉGLER LES DIRECTIONS DE ROULEMENT DE DEUX ESSIEUX ORIENTABLES D'UN VÉHICULE L'UN PAR RAPPORT À L'AUTRE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **09.08.2013 DE 102013108682**

(43) Veröffentlichungstag der Anmeldung:
**15.06.2016 Patentblatt 2016/24**

(73) Patentinhaber: **Dürr Assembly Products GmbH 66346 Püttlingen (DE)**

(72) Erfinder:
• **TENTRUP, Thomas**
**66663 Merzig-Mechern (DE)**

• **MEYERS, Christoph**
**66679 Losheim am See (DE)**

(74) Vertreter: **Wieske, Thilo Patentanwaltskanzlei Vièl & Wieske PartGmbB Feldmannstrasse 110 66119 Saarbrücken (DE)**

(56) Entgegenhaltungen:
**DE-A1- 3 622 072     US-A- 5 105 546
US-A- 5 143 400     US-A- 5 417 299
US-A- 5 553 389**

• **None**

**Beschreibung**

Die vorliegende Erfindung betrifft eine Vorrichtung und ein Verfahren zur Messung und Ermittlung relevanter Parameter für die Einstellung der Fahrtrichtungen zweier lenkbarer Achsen eines Fahrzeugs relativ zueinander nach dem Oberbegriff der Ansprüche 1 sowie 5.

Ein Ziel der Fahrwerkeinstellung von Fahrzeugen mit zwei lenkbaren Achsen (A1, A2) ist, dass die Fahrtrichtungen der lenkbaren Achsen bei horizontaler Lenkradstellung mit der Fahrachse des Fahrzeugs übereinstimmen. Fahrzeuge, die zwei lenkbare Achsen besitzen, sind beispielsweise Lastkraftwagen, die zum Transport von Gütern mit hohem Gewicht genutzt werden. Die Fahrachse ist durch die Fahrtrichtung einer Hinterachse definiert. Hierbei kann die Fahrwerkgeometrie des Fahrzeugs mit der Vorrichtung und mit dem Verfahren aus DE 10 2008 045 307 A1 vermessen. Als Ergebnis der Fahrwerkvermessung und der Erfassung des Lenkradwinkels $\Omega$ (Winkelabweichung des Lenkrades von der Horizontalen) des Fahrzeugs für die beiden lenkbaren Achsen A1 und A2 ergeben sich die vier Einzelspurwinkel in Bezug auf die Fahrachse des Fahrzeugs als Funktion des Lenkradwinkels $\Omega$: $SpA1_{links}(\Omega)$, $SpA1_{rechts}(\Omega)$, $SpA2_{links}(\Omega)$, $SpA2_{rechts}(\Omega)$.

Aus den jeweils zwei Einzelspurwinkeln der beiden lenkbaren Achsen ergibt sich die Fahrtrichtung $\delta A1$ der Achse A1 in Bezug auf die Fahrachse des Fahrzeugs als Funktion des Lenkradwinkels

$$\delta A1(\Omega) = (SpA1_{links}(\Omega) - SpA1_{rechts}(\Omega))/2 \qquad (1a)$$

und die Fahrtrichtung $\delta A2$ der Achse A2 in Bezug auf die Fahrachse des Fahrzeugs als Funktion des Lenkradwinkels

$$\delta A2(\Omega) = (SpA2_{links}(\Omega) - SpA2_{rechts}(\Omega))/2 \qquad (1b)$$

als auch die Gesamtspur GSpA1der Achse A1

$$GSpA1 = SpA1_{links}(\Omega) + SpA1_{rechts}(\Omega) \qquad (2a)$$

und die Gesamtspur GSpA2der Achse A2

$$GSpA2 = SpA2_{links}(\Omega) + SpA2_{rechts}(\Omega) \qquad (2b)$$

Vor der Einstellung besitzen die beiden lenkbaren Achsen (A1, A2) folgenden Zustand:

•

$$\delta A1(\Omega) = (\Omega - \Delta\Omega)/L\ddot{U}b \qquad (3)$$

wobei $\Delta\Omega$ die Winkelabweichung der Lenkradstellung von der Horizontalen bei Geradeausfahrt des Fahrzeugs (Lenkradschiefstellung) (d.h. bei $\delta A1 = 0$) darstellt und

•   $\delta A1 \neq \delta A2$, wobei $|\delta A1|$, $|\delta A2| \ll 5°$ gilt auf Grund des geraden Einfahrens des Fahrzeugs auf den Prüfstand.

Unter der Bedingung $|\delta A1|$, $|\delta A2| \ll 5°$ folgt für alle folgenden Berechnungen, dass die Gesamtspurwinkel GSpA1 und GSpA2 nicht abhängig von der Lenkradstellung $\Omega$ sind. Weiterhin wird vorausgesetzt, dass Effekte des Lenkradspiels durch geeignete Maßnahmen (siehe Patent DE 10 2005 042 446 B3) ausgeschlossen sind und das Lenkrad sich in der Mitte des Lenkradspiels befindet und bei allen Einstellungen in diesem Zustand verbleibt.

Eine korrekte Einstellung der beiden lenkbaren Vorderachsen mit dem Lenkradübersetzungsverhältnis LÜb ist erreicht, wenn

**Einstellung 1** zu $\Delta\Omega = 0$ und damit zu $\delta A1(\Omega) = \Omega / L\ddot{U}b$ mit $\delta A1(\Omega) = 0$ für $\Omega = 0$ führt und
**Einstellung 2** zu $\delta A1(\Omega) = \delta A2(\Omega)$ und daher $0 = \Delta = \delta A1(\Omega) - \delta A2(\Omega)$ führt, wobei $\Delta$ die Differenz der Fahrrichtungen der lenkbaren Achsen A1 und A2 ist.

Die Einstellungen 1 und 2 sind voneinander unabhängig und das bedeutet, dass die Reihenfolge der Einstellungen 1 und 2 auch vertauscht werden kann bzw. die Einstellung 1 ohne die Einstellung 2 und umgekehrt durchgeführt werden kann.

Die Gesamtspurwinkel der Lenkachsen A1 (GSpA1) und der Lenkachse A2 (GSpA2) sind unter den obigen Randbedingungen (d.h. |$\delta$A1|, |$\delta$A2| << 5°) konstant und entsprechen den jeweiligen Sollwerten, d.h. die Gesamtspurwinkel ändern sich also nicht bei der Einstellung 1 und 2.

Die Einstellung 1 kann nach der Vermessung des Fahrzeugs beispielhaft mit der Vorrichtung und dem Verfahren aus DE 10 2008 045 307 A1 vorgenommen werden.

Dazu werden die Messeinheiten gegenüber den Rädern der Lenkachse A1 positioniert und die Messung gestartet. Der Werker stellt dabei die Fahrrichtung $\delta$A1 auf Null.

Danach wird das Lenkrad, mit dem eine Lenkradwaage zur Messung des Lenkradwinkels $\Omega$ verbunden ist, gegen die Lenkstange gedreht bis auch der Lenkradwinkel Null anzeigt und die Fahrtrichtung $\delta$A1 bei Null verbleibt.

Der Nachteil bei der Vorgehensweise bei der Einstellung 1 ist, dass bei der Justierung des Lenkrades über die Drehung gegen die Lenkstange die Fahrtrichtung der Lenkachse $\delta$A1 wegen der mechanischen Kopplung aus Null herausbewegt wird und somit die Nullstellung der Lenkachse $\delta$A1 wiederhergestellt und die Justierung des Lenkrads wiederholt werden muss. Dies kostet wertvolle Zykluszeit.

Nach der Einstellung 1 können die Messeinheiten des Fahrwerkstandes aus DE 10 2008 045 307 A1 zur Einstellung 2 gegenüber den Rädern der Lenkachse A2 positioniert und die Messung gestartet werden.

Der Werker stellt über die mechanische Kopplung zwischen den beiden Lenkachsen die Fahrtrichtung $\delta$A2 der zweiten Lenkachse A2 auf Null. Hierbei muss die Fahrtrichtung $\delta$A1 auch bei Null verbleiben.

Der Nachteil bei dieser Vorgehensweise für die Einstellung 2 ist, dass durch die Kopplung die Fahrtrichtung beider Lenkachsen sich verändern kann, sodass nach der Einstellung der zweiten Lenkachse die Fahrrichtung der ersten Lenkachse wiederum mit einer weiteren Messung kontrolliert und eventuell nachjustiert werden muss. Dies kostet wertvolle Zykluszeit.

Das Problem bei der Einstellung 1 liegt darin, dass zwei Messgrößen: die Fahrtrichtung der ersten Lenkachse $\delta$A1 und der Lenkradwinkel $\Omega$ separat auf Null gestellt werden müssen.

Das Problem bei der Einstellung 2 liegt darin, dass die Fahrtrichtungen beider Lenkachsen während der Einstellung 2 gemessen werden müssen, um eine genaue Einstellung zu gewährleiten.

Es wird ergänzend noch auf folgenden Stand der Technik verwiesen. Die DE 10 2006 036 671 A1 beschreibt ein Verfahren zur Bestimmung der Achsgeometrie eines Fahrzeuges. Es wird ein Verfahren beschrieben, bei dem Lichtlinien auf ein Rad projiziert werden, wobei aus einer Messung der Lichtlinien die Orientierung der Radebene dieses Rades bestimmt wird. Die US 7,864,309 B2 beschreibt die weitere Ausgestaltung eines solchen Verfahrens, bei dem nicht lediglich einzelne Punkte der Lichtlinien ausgewertet werden, sondern bei dem zunächst der Verlauf einer Kurve bestimmt wird, die den Verlauf der einzelnen gemessenen Linien repräsentiert. Die US-PS 5,675,515 beschreibt eine Vorgehensweise, bei der die Radebene vermessen wird, indem Targets als Zielpunkt an dem Rad befestigt werden, dessen Radebene bestimmt werden soll. Die EP 895 056 A2 beschreibt eine Vorgehensweise, bei der zur Bestimmung der Parameter der Fahrwerksgeometrie jedem Rad des Fahrzeugs eine Messeinrichtung zugeordnet ist. Die US-PS 5,143,400 beschreibt eine Vorgehensweise, bei der Änderungen der statischen oder dynamischen Lastverteilung des Fahrzeugs im laufenden Farbetrieb und deren Einfluss auf den Spurwinkel ausgeglichen werden. Damit soll sichergestellt werden, dass das Fahrwerk dem Ackermann-Prinzip der Lenkung genügt.

Außerdem wird auf die US-PS 5,417,299 verwiesen. Aus dieser Patentschrift ist es bekannt, ein Fahrzeug mit einer lenkbaren Vorderachse und einer lenkbaren Hinterachse vorzusehen. Dabei ist bei einer ersten technischen Ausgestaltung eines Fahrzeugs der Lenkwinkel der Hinterachse im laufenden Fahrbetrieb derart einstellbar, dass ein Sollwert ermittelt wird, der neben weiteren Fahrbedingungen auch von dem Istwert des Lenkwinkels der Vorderachse abhängt. Allerdings sind Stellmittel vorhanden, mit denen der Lenkwinkel der Hinterachse grundsätzlich unabhängig vom Lenkwinkel der Vorderachse einstellbar ist. Insbesondere besteht damit keine mechanische Kopplung zwischen den gelenkten Achsen eines solchen Fahrzeugs. Zur Erfassung der Lenkwinkel im laufenden Fahrbetrieb ist an der Vorderachse und der Hinterachse dieses Fahrzeugs lediglich ein Sensor angebracht. Der Lenkwinkel der Hinterachse kann gleichsinnig eingestellt werden zum Lenkwinkel der Vorderachse. Es ist unter entsprechenden Fahrbedingungen ebenso vorgesehen, den Lenkwinkel der Hinterachse gegensinnig einzustellen zum Lenkwinkel der Vorderachse. Es ist - ohne eine Darstellung in den Zeichnungen - eine andere technische Ausgestaltung eines Fahrzeugs beschrieben, bei der eine Kopplung zwischen den Lenkwinkeln der Räder der beiden Achsen derart besteht, dass der Lenkwinkel der Räder der einen Achse im laufenden Fahrbetrieb über die Kopplung direkt abhängig von den Lenkwinkeln der Räder der anderen Achse eingestellt wird.

Der vorliegenden Erfindung liegt die Aufgabe zu Grunde, die Mess- und Einstellarbeiten schnell und effizient ausführen zu können.

Diese Aufgabe wird nach der vorliegenden Erfindung gelöst durch eine Vorrichtung zur Messung und Ermittlung relevanter Parameter für die Einstellung der Fahrtrichtungen ($\delta$A1, $\delta$A2) zweier lenkbarer Achsen (A1, A2) eines Fahrzeugs relativ zueinander nach Anspruch 1. Dabei ist die Einstellung der Fahrtrichtungen (SA1, $\delta$A2) der beiden lenkbaren Achsen (A1, A2) Bestandteil der Fahrwerkeinstellung des Fahrzeugs. Weiterhin sind die beiden lenkbaren Achsen (A1, A2) mechanisch miteinander gekoppelt. Nach der vorliegenden Erfindung ist auf jeder Fahrzeugseite jeweils nur eine Messeinheit zur Messung des Spurwinkels (SpA1$_{links}$, SpA2$_{rechts}$) eines dieser Messeinheit zugeordneten Fahrzeugrades vorhanden. Eine erste Messeinheit ist dem Rad der ersten der lenkbaren Achsen (A1, A2) auf der linken Fahrzeugseite zugeordnet. Die zweite Messeinheit ist dem Rad der zweiten der lenkbaren Achsen auf der rechten Fahrzeugseite zugeordnet. Die Ausgangssignale der Messeinheiten werden einer Auswertungseinheit zugeführt. In der Auswertungseinheit wird aus den zugeführten Signalen der Messeinheiten die Differenz Δ der Fahrtrichtungen (SA1, δA2) der beiden lenkbaren Achsen (A1, A2) oder ein diese Differenz Δ repräsentierender Parameter ermittelt und als Ausgangssignal der Auswertungseinheit bereitgestellt.

Dieses Ausgangssignal kann in unterschiedlicher Art und Weise weiterverarbeitet und weiter genutzt werden. Entsprechende Ausführungsformen sind in den folgenden Ansprüchen angegeben.

Vorteilhaft zeigt sich bei dieser Ausgestaltung, dass die Einstellarbeiten schnell und effizient vorgenommen werden können, obwohl für die Messungen nur zwei Messeinheiten benötigt werden.

Bei der Ausgestaltung der Vorrichtung nach Anspruch 2 wird das Ausgangssignal der Auswertungseinheit einer Anzeigeeinheit zugeführt und dort angezeigt.

Bei dieser Ausgestaltung befindet sich die Anzeigeeinheit vorteilhaft im Sichtbereich eines Werkers, der die Einstellarbeiten durchführt. Der Werker kann dann die Einstellarbeiten so ausführen, dass die angezeigte Differenz Δ bzw. der diese Differenz Δ repräsentierende Parameter gleich Null wird. Der die Differenz Δ repräsentierende Parameter kann beispielsweise so ausgestaltet sein, dass dem Werker lediglich angezeigt wird, in welche Richtung er ein Einstellmittel bewegen muss (ggf. noch zusätzlich ob eine vergleichsweise große Verstellung oder eine eher kleine Verstellung notwendig ist). Dies kann beispielsweise durch die Anzeige eines Pfeils erfolgen, dessen Richtung die Richtung der Verstellung des Einstellmittels anzeigt und dessen Länge und/oder Dicke anzeigt, ob eine große oder eher eine kleine Verstellung notwendig ist.

Alternativ oder zusätzlich zu der Anzeige bei der Ausgestaltung der Vorrichtung nach Anspruch 2 kann gemäß Anspruch 3 das Ausgangssignal der Auswertungseinheit einer automatischen Einstelleinheit zugeführt werden. Diese automatische Einstelleinheit steht in Wirkverbindung mit Einstellmitteln der Kopplung der Fahrtrichtungen (SA1, δA2) der beiden lenkbaren Achsen (A1, A2) relativ zueinander. Dabei ist die automatische Einstelleinheit so konfiguriert, dass diese abhängig von dem Ausgangssignal der Auswertungseinheit so auf die Einstellmittel einwirkt, dass die Differenz Δ oder der diese Differenz Δ repräsentierende Parameter Null wird.

Durch diese Ausgestaltung werden die Einstellarbeiten automatisiert ausgeführt.

Die automatische Einstelleinheit kann so ausgeführt sein, dass dieser von der Auswertungseinheit ein Signal zugeführt wird, das die Differenz Δ der Fahrtrichtungen der beiden lenkbaren Achsen repräsentiert. In diesem Fall weist die automatische Einstelleinheit selbst eine Recheneinheit auf, in der aus diesem Signal ermittelt wird, wie die automatische Einstelleinheit auf die Einstellmittel der Kopplung der beiden lenkbaren Achsen einwirken muss, damit die Differenz Δ betragsmäßig kleiner wird als ein Schwellwert.

Die Schnittstelle zwischen der Auswertungseinheit und der automatischen Einstelleinheit kann auch so definiert sein, dass in der Auswertungseinheit vollständig ermittelt wird, wie die automatische Einstelleinheit auf die Einstellmittel der Kopplung der lenkbaren Achsen einwirken muss. In diesem Fall wird von der automatischen Einstelleinheit lediglich noch der "Stellbefehl" ausgeführt, der der automatischen Einstelleinheit von der Auswerteeinheit zugeführt wird.

Anspruch 4 beschreibt eine Vorrichtung, mit der es weiterhin in einfacher und effektiver Weise möglich wird, das Lenkrad so zu justieren gegenüber der Lenkstange, dass sich dieses bei der Fahrtrichtung δA1 der lenkbaren Achse, die mit der Lenkstange gekoppelt ist, mit dem Wert Null (d.h. bei Geradeausfahrt des Fahrzeugs) in einer horizontalen Stellung befindet. Dies ist vorstehend als "Einstellung 1" bezeichnet.

In vorteilhafter Weiterbildung der bisher bekannten Vorgehensweise zur Durchführung der Einstellung 1 weist bei der Ausgestaltung nach Anspruch 4 die Vorrichtung weiterhin eine Messeinrichtung auf zur Erfassung der Stellung des Lenkrades. Von der Messeinrichtung wird ein entsprechendes Signal einer Auswertungseinrichtung zugeführt. Weiterhin ist eine Messvorrichtung vorhanden zur Erfassung der Fahrtrichtung δA1 wenigstens einer der lenkbaren Achsen des Fahrzeugs (Achse A1). Der Auswertungseinrichtung wird von der Messvorrichtung ein die Fahrrichtung δA1 der wenigstens einen lenkbaren Achse A1 repräsentierendes Signal zugeführt. Dabei ist die Auswertungseinrichtung so eingerichtet, dass diese aus den zugeführten Signalen der Messeinrichtung und der Messvorrichtung unter Berücksichtigung der Lenkübersetzung LÜb des Fahrzeuges einen Parameter ermittelt und ausgibt, der einem Winkel entspricht, um den das Lenkrad bei den vorliegenden Verhältnissen gegenüber der Lenkstange verdreht werden muss, damit bei vollständig justiertem Lenkrad bei der Fahrtrichtung δA1 von Null der wenigstens einen lenkbaren Achse A1 auch der Lenkradwinkel (Ω) gleich Null ist.

Das bedeutet, dass es bei der beschriebenen Anordnung nach Anspruch 4 nicht mehr notwendig ist, zur Einstellung des Lenkrades zunächst die Fahrtrichtung δA1 auf den Wert Null zu stellen. Vielmehr wird bei der Ausgestaltung nach Anspruch 4 ein Korrekturparameter ermittelt, um den das Lenkrad gegenüber der Lenkstange ausgehend von der aktuellen Position verdreht werden muss, so dass bei Geradeausfahrt des Fahrzeugs das Lenkrad in der "Horizontalstellung" ist.

Es muss also mit der Ausgestaltung nach Anspruch 4 weder die Fahrtrichtung δA1 der lenkbaren Achse A1 auf Null gestellt werden noch ist es notwendig, den Lenkradwinkel auf Null einzustellen.

Bisher war es notwendig, zunächst die Fahrtrichtung δA1 der lenkbaren Achse A1 des Fahrzeugs auf den Wert Null einzustellen, um dann auch das Lenkrad gegenüber der Lenkstange so zu verdrehen, dass sich das Lenkrad in der Horizontalstellung befindet. Dies kostet wertvolle Zykluszeit durch die Notwendigkeit, zunächst die Fahrtrichtung δA1 auf den Wert Null einzustellen.

Bei der Ausgestaltung nach Anspruch 4 wird ein Parameter ausgegeben bezogen auf die aktuelle Lenkradstellung, durch den es möglich wird, bei Fahrrichtungen δA1 ≠ 0 der lenkbaren Achse A1 das Lenkrad gegenüber der Lenkstange so zu positionieren, dass das so positionierte Lenkrad bei δA1=0 in der Horizontalstellung ist..

Zur Umsetzung des oben beschriebenen Gesamtzusammenhangs erfolgt daher eine Ermittlung der Lenkradschiefstellung ΔΩ aus der Fahrrichtung der ersten Lenkachse δA1 gemessen mit der Messvorrichtung und dem Lenkradwinkel Ω gemessen mit einer Lenkradwaage, die mit dem Lenkrad verbunden ist. Die Lenkradwaage ist beispielsweise beschrieben in dem Schutzrecht DE 10 2008 045 307 A1. Die Messvorrichtung kann beispielsweise aus den beiden Messeinheiten 1 und 2 bestehen, die jeweils gegenüber einem Rad einer lenkbaren Achse positioniert sind. Diese kann die lenkbare Achse A1 sein.

Der Zusammenhang zwischen der Fahrtrichtung der gelenkten Achse (hier der ersten Achse A1, also δA1), der Lenkradübersetzung LÜb, dem Lenkradwinkel Ω und der Lenkradschiefstellung ΔΩ ergibt sich aus Formel (3):

$$\Delta\Omega = \Omega - \text{LÜb} * \delta A1 \hspace{8cm} (6)$$

Formel (6) zeigt, dass zur Justage der Lenkradstellung - durch Drehung gegen die Lenkstange - als Parameter immer unabhängig vom Wert der Fahrtrichtung der ersten Lenkachse die momentane Lenkradschiefstellung ΔΩ ausgegeben werden kann, die dann auf Null justiert wird. Voraussetzung dabei ist, dass die Lenkradübersetzung LÜb des Fahrzeugs bekannt ist.

Der Parameter wird in diesem Fall als "Korrekturwinkel" ausgegeben, um den das Lenkrad gegenüber der aktuellen Position bezogen auf die Lenkstange verdreht werden muss.

Dabei ist zu beachten, dass das Lenkrad nicht kontinuierlich um beliebige Winkel gegenüber der Lenkstange verdrehbar ist sondern inkrementell in Schritten von jeweils einigen Grad. Als Parameter kann daher die Zahl der Schritte sowie die Orientierung angegeben werden, um die das Lenkrad gegenüber der Lenkstange verdreht werden muss (bezogen auf die aktuelle Position des Lenkrads relativ zur Lenkstange). Die Zahl der Schritte sowie die Orientierung werden dabei so bestimmt, dass die betragsmäßige Differenz zur tatsächlich ermittelten Lenkradschiefstellung ΔΩ minimiert wird. Da die Justierung des Lenkrades nur inkrementell und nicht kontinuierlich möglich ist, wird in den meisten Fällen eine geringfügige Differenz verbleiben. Weiterhin sollte das Lenkrad während dieser Einstellung in der Mitte des Lenkradspiels verbleiben.

Weiterhin wird diese Aufgabe gelöst durch ein Verfahren nach Anspruch 5. Dabei ist die Einstellung der Fahrtrichtungen (SA1, δA2) der beiden lenkbaren Achsen (A1, A2) Bestandteil der Fahrwerkeinstellung des Fahrzeugs. Weiterhin sind die beiden lenkbaren Achsen (A1, A2) mechanisch miteinander gekoppelt. Erfindungsgemäß erfolgt die Einstellung der Fahrtrichtungen (SA1, δA2) zweier lenkbarer Achsen (A1, A2) eines Fahrzeugs relativ zueinander mit jeweils nur einer Messeinheit pro Fahrzeugseite. Dazu wird die Differenz (Δ) der Fahrtrichtungen (SA1, δA2) der beiden lenkbaren Achsen (A1, A2) oder ein diese Differenz (Δ) repräsentierender Parameter ermittelt aus einer Messung des Spurwinkels (SpA1$_{links}$) des linken Rades einer ersten der beiden Achsen (A1) und der Messung des Spurwinkels (SpA2$_{rechts}$) des rechten Rades der zweiten Achse (A2). Die Einstellung der Fahrtrichtungen (SA1, δA2) der beiden lenkbaren Achsen (A1, A2) relativ zueinander wird so vorgenommen, dass die Differenz (Δ) oder der diese Differenz (Δ) repräsentierende Parameter betragsmäßig kleiner wird als ein Schwellwert.

Dieses Verfahren beschreibt, wie die Einstellung mit geringem apparativem Aufwand vorgenommen werden kann.

Es ist dabei ersichtlich, dass die Bezugnahme auf das "linke Rad" und das "rechte Rad" sowie die Bezeichnung der Lenkachsen (A1 und A2) bei den vorstehenden Ansprüchen austauschbar sind. Es ist also zunächst beliebig, ob an der vorderen der beiden lenkbaren Achsen die Messung am linken oder rechten Rad erfolgt. Die Bedingung für die Mess- und Einstellarbeiten ist vorliegend, dass die Messung bei der hinteren der beiden lenkbaren Achsen nur am Rad der anderen Fahrzeugseite (gegenüber der vorderen lenkbaren Achse) erfolgen muss.

Damit wird es vorteilhaft möglich, mit nur einer Messeinheit pro Seite zur Messung des Spurwinkels, des Sturzwinkels und der Koordinaten des Radmittelpunktes eines Fahrwerkstandes die Einstellarbeiten vorzunehmen. Die Messungen sind beispielhaft in DE 10 2008 045 307 A1 beschrieben.

Der Vorteil der Erfindung besteht darin, diese Einstellarbeiten mit nur einer Messeinheit pro Fahrzeugseite nach der Durchführung der Einstellung 1 sicherzustellen.

Es gilt für die Differenz Δ der Fahrtrichtungen δA1(Ω) und δA2(Ω):

$$\Delta = \delta A1(\Omega) - \delta A2(\Omega) \qquad\qquad (4)$$

Durch Einsetzten der Formeln (1a,b) und (2a,b) in (3) ergibt sich:

$$\Delta = \delta A1(\Omega) - \delta A2(\Omega) = SpA1_{links}(\Omega) + SpA2_{rechts}(\Omega) - (GSpA1 + GSpA2)/2 \qquad (5a)$$

oder

$$\Delta = \delta A1(\Omega) - \delta A2(\Omega) = (GSpA1 + GSpA2)/2 - SpA1_{rechts}(\Omega) - SpA2_{links}(\Omega) \qquad (5b)$$

Zur Einstellung 2 wird - vorzugsweise nach Durchführung der Einstellung 1 - eine Messeinheit auf der linken Seite gegenüber dem linken Rad der Lenkachse 1 belassen. Die andere Messeinheit wird auf der rechten Seite positioniert gegenüber dem rechten Rad der Lenkachse 2. Es spielt ersichtlich keine Rolle, welche der beiden lenkbaren Achsen mit der Ziffer 1 und welche mit der Ziffer 2 bezeichnet wird. Es ist daher ebenso möglich, eine Messeinheit auf der rechten Seite gegenüber dem rechten Rad der Lenkachse 1 zu belassen und die andere Messeinheit auf der linken Seite gegenüber dem linken Rad der Lenkachse 2 zu positionieren.

Danach wird die Messung der Differenz der Fahrtrichtungen $\Delta$ gestartet und der Werker stellt über die mechanische Kopplung $\Delta$ auf Null.

Anspruch 6 betrifft die weitere Ausgestaltung des Verfahrens nach Anspruch 5. Bei dem Verfahren nach Anspruch 6 wird weiterhin die Stellung des Lenkrades (Lenkradwinkel $\Omega$) erfasst. Aus der Fahrtrichtung $\delta A1$ wenigstens einer lenkbaren Achse (A1) des Fahrzeugs, aus der Stellung des Lenkrades sowie der Lenkübersetzung LÜb des Fahrzeugs wird ein Parameter ermittelt und ausgeben, der einem Winkel ($\Delta\Omega$) entspricht, um den das Lenkrad bei den vorliegenden Verhältnissen gegenüber der Lenkstange verdreht werden muss, damit bei vollständig justiertem Lenkrad bei der Fahrtrichtung $\delta A1$ der lenkbaren Achse von Null auch der Lenkradwinkel ($\Omega$) gleich Null ist.

Dieses Verfahren ist mit den gegenständlichen Merkmalen des Vorrichtungsanspruchs 4 ausführbar.

Es ist ersichtlich, dass die Vorrichtung nach Anspruch 4 sowie auch das Verfahren nach Anspruch 6 nicht nur Verwendung finden kann im Zusammenhang mit der Einstellung der Fahrtrichtungen zweier lenkbarer Achsen sondern dass diese Vorrichtung und auch das Verfahren zur Einstellung des Lenkradwinkels auch Verwendung finden kann bei einer anderen Vorgehensweise zur Einstellung der Fahrtrichtungen zweier lenkbarer Achsen eines Fahrzeugs. Ebenso ist ersichtlich, dass eine solche Vorrichtung sowie ein solches Verfahren auch Verwendung finden kann bei einem Fahrzeug mit lediglich einer lenkbaren Achse. Der Vorteil bei der Ausgestaltung nach den Ansprüchen 4 und 6, dass es nämlich nicht notwendig ist, zunächst die Fahrtrichtung $\delta A$ der lenkbaren Achse auf Null einzustellen zur Justierung des Lenkrades, ergibt sich ebenso auch bei einem Fahrzeug mit lediglich einer lenkbaren Achse. Es wird daher ausdrücklich vorbehalten, diesen Aspekt in einer separaten Teilanmeldung als unabhängige Ansprüche zu verfolgen. Dies gilt dann unabhängig von der Ausgestaltung des Fahrzeugs mit einer oder mit zwei lenkbaren Achsen sowie unabhängig davon, wie die Fahrzeugparameter an der bzw. den Achsen eingestellt werden.

Ein Ausführungsbeispiel der Erfindung ist in der Zeichnung dargestellt.

Figur 1: eine erste Vorrichtung zur Einstellung der Fahrtrichtungen zweier lenkbarer Achsen und

Figur 2: eine weitere Vorrichtung zur Durchführung der Justierung des Lenkrades.

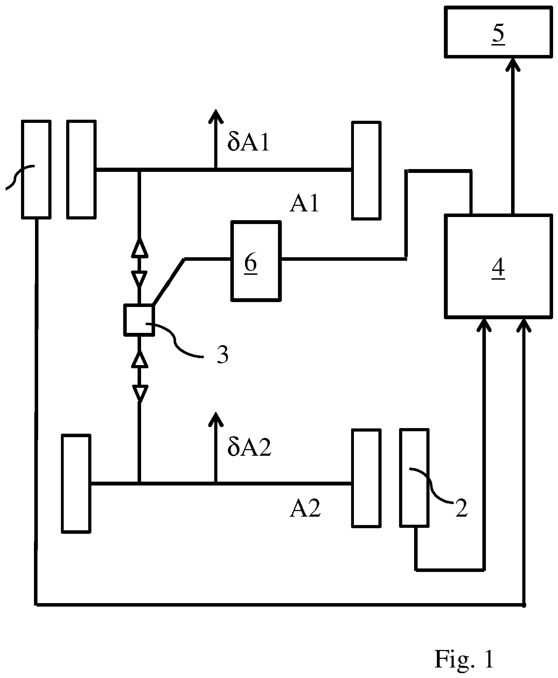

Figur 1 zeigt mit den Bezugsziffern 1 und 2 jeweils eine Messeinheit, die einem der Räder des Fahrzeugs zugeordnet ist. Es ist zu sehen, dass diese Messeinheiten Rädern verschiedener lenkbarer Achsen A1 und A2 auf unterschiedlichen Fahrzeugseiten zugeordnet sind.

Diese Messeinheiten 1 und 2 erfassen jeweils die Einzelspurwinkel der zugeordneten Räder.

Mit der Bezugsziffer 3 ist ein Einstellmittel bezeichnet zur Einstellung der Fahrtrichtungen $\delta A1$ und $\delta A2$ der beiden lenkbaren Achsen A1 und A2 relativ zueinander.

Unter der Voraussetzung, dass die Gesamtspurwerte GSpA1 und GSpA2 der Achsen A1 und A2 bei der Einstellung unverändert bleiben bzw. dass die Änderungen der Gesamtspurwerte vernachlässigbar sind, ergibt sich aus der obigen Herleitung, dass aus einer Messung des Spurwertes $SpA1_{links}$ und einer Messung des Spurwertes $SpA2_{rechts}$ bei der Einstellung erreicht werden kann, dass der Wert $\Delta$ betragsmäßig kleiner ist als ein Schwellwert.

Basierend auf dieser Erkenntnis werden die Ausgangssignale der Messeinheiten 1 und 2 einer Auswertungseinheit 4 zugeführt, die derart ausgestaltet ist, dass in der Auswertungseinheit der Wert $\Delta$ ermittelt wird oder ein diesen Wert $\Delta$ repräsentierender Parameter. Dazu weist diese Auswertungseinheit 4 zwei Eingangsports auf, über die der Auswertungseinheit 4 die Ausgangssignale der Messeinheiten 1 und 2 zugeführt werden. Die Auswertungseinheit 4 kann ein Computer sein, der entsprechend programmiert ist, so dass - basierend auf der obigen Herleitung - aus diesen Eingangsgrößen der Wert $\Delta$ oder ein diesen Wert $\Delta$ repräsentierender Parameter ermittelt wird.

Außerdem ist eine Anzeigeeinheit 5 zu sehen, der als Ausgangssignal der Auswertungseinheit 4 der Wert $\Delta$ oder ein diesen Wert $\Delta$ repräsentierender Parameter zugeführt und dort angezeigt wird.

Dadurch wird es möglich, bei der Durchführung der Einstellarbeiten den Wert $\Delta$ bzw. einen diesen Wert $\Delta$ repräsentierenden Parameter anzuzeigen.

Bei den Einstellarbeiten werden die Fahrtrichtungen $\delta A1$ und $\delta A2$ der beiden lenkbaren Achsen A1 und A2 relativ zueinander eingestellt. Solange Einstellarbeiten vorgenommen werden, ändert sich daher während dieser Einstellarbeiten der Wert $\Delta$ bzw. der diesen Wert $\Delta$ repräsentierende Parameter. Da diese Größe von der Anzeigeeinheit 5 angezeigt wird, kann der Werker die Einstellarbeiten so vornehmen, dass der Wert $\Delta$ bzw. der diesen Wert $\Delta$ repräsentierende Parameter betragsmäßig kleiner ist als ein Schwellwert und im optimalen Fall Null beträgt.

Alternativ zur Zuführung des Ausgangssignals der Auswertungseinheit 4 zu einer Anzeigeeinheit 5 kann dieses Ausgangssignal auch einer automatischen Einstelleinheit 6 zugeführt werden. Diese automatische Einstelleinheit 6 kann so ausgestaltet sein, dass diese abhängig von dem ihr zugeführten Ausgangssignal der Auswertungseinheit 4 die Einstellung der Einstellmittel 3 so vornimmt, dass der Wert $\Delta$ bzw. ein diesen Wert $\Delta$ repräsentierender Parameter Null wird.

Dabei kann (wie in der Figur 1 dargestellt) auch in diesem Fall das Ausgangssignal der Auswertungseinheit 4 ebenfalls einer Anzeigeeinheit 5 zugeführt werden. Zusätzlich zu dem automatisierten Einstellvorgang ist dann eine optische Kontrolle des Einstellvorgangs über die Anzeigeeinheit 5 möglich.

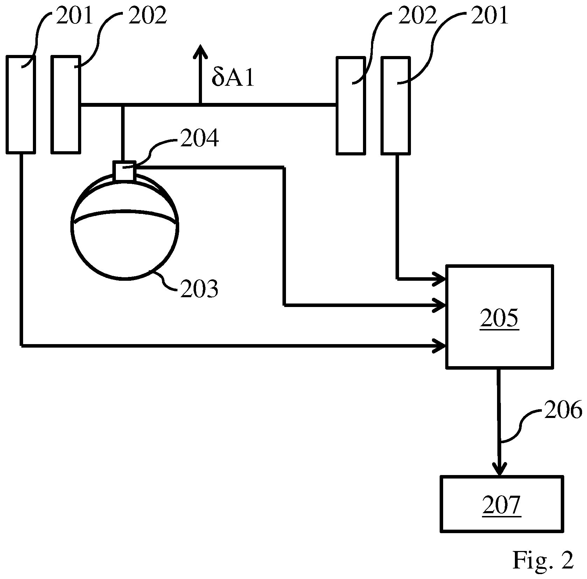

Figur 2 zeigt die alternative Ausgestaltung zur "Einstellung 1" entsprechend den Ansprüchen 5 und 6 der vorliegenden Erfindung. Es ist eine lenkbare Achse eines Fahrzeugs dargestellt mit den beiden Rädern 202.

Diesen Rädern 202 ist eine Messvorrichtung 201 zugeordnet zur Erfassung der Fahrtrichtung $\delta A1$ der lenkbaren Achse. Die Messvorrichtung 201 kann beispielsweise den Messeinheiten 1 und 2 entsprechen, die im Zusammenhang mit Figur 1 dargestellt worden sind. Die Ausgangssignale der Messvorrichtung 201 werden einer Auswertungseinrichtung 205 zugeführt.

Außerdem ist ein Lenkrad 203 zu sehen, dem eine Messeinheit 204 zugeordnet ist. Diese Messeinheit 204 kann beispielsweise nach der DE 10 2008 045 307 A1 ausgebildet sein. Die Ausgangssignale bzw. das Ausgangssignal der Messeinheit 204 werden ebenfalls der Auswertungseinrichtung 205 zugeführt.

In der Auswertungseinrichtung 205 wird aus den zugeführten Signalen sowie der Lenkradübersetzung LÜb des jeweiligen Fahrzeugs ein Parameter ermittelt, der der Lenkradschiefstellung $\Delta\Omega$ entspricht.

Dieser Parameter kann die Lenkradschiefstellung $\Delta\Omega$ direkt sein (nach Betrag und Orientierung des Winkels). Ebenso kann es sich dabei um einen entsprechenden Parameter handeln, wie dies beispielsweise im Zusammenhang mit Anspruch 5 im Hinblick auf die inkrementelle Verstellbarkeit des Lenkrades gegenüber der Lenkstange angesprochen wurde.

Dieser Parameter kann als Ausgangssignal 206 auf einer Anzeigeeinrichtung 207 dargestellt werden.

Auch aus dem Zusammenhang der Darstellung der Figur 2 ist ersichtlich, dass die Justierung des Lenkrades mit der dargestellten Vorgehensweise unabhängig ist von der Vorgehensweise zur Einstellung der Fahrzeugparameter an der Achse des Fahrzeugs.

**Patentansprüche**

1. Vorrichtung zur Messung und Ermittlung relevanter Parameter für die Einstellung der Fahrtrichtungen ($\delta A1$, $\delta A2$) zweier lenkbarer Achsen (A1, A2) eines Fahrzeugs relativ zueinander, wobei die Einstellung der Fahrtrichtungen (SA1, $\delta A2$) der beiden lenkbaren Achsen (A1, A2) Bestandteil der Fahrwerkeinstellung des Fahrzeugs ist und wobei die beiden lenkbaren Achsen (A1, A2) mechanisch über eine mechanische Kopplung miteinander gekoppelt sind, **dadurch gekennzeichnet, dass** jeweils nur eine Messeinheit (1, 2) zur Messung des Einzelspurwinkels ($SpA1_{links}$, $SpA2_{rechts}$) eines dieser Messeinheit (1, 2) zugeordneten Rades auf jeder Fahrzeugseite vorhanden ist derart, dass eine erste Messeinheit (1) dem Rad der ersten der lenkbaren Achsen (A1, A2) auf der linken Fahrzeugseite zugeordnet ist und dass die zweite Messeinheit (2) dem Rad der zweiten der lenkbaren Achsen (A2, A1) auf der rechten Fahrzeugseite zugeordnet ist, wobei die Ausgangssignale der Messeinheiten (1, 2) einer Auswertungseinheit (4) zugeführt werden, wobei in der Auswertungseinheit (4) aus den zugeführten Signalen der Messeinheiten (1, 2) die Differenz $\Delta$ der Fahrtrichtungen (SA1, $\delta A2$) der beiden lenkbaren Achsen (A1, A2) oder ein diese Differenz $\Delta$ repräsentierender Parameter ermittelt und als Ausgangssignal der Auswertungseinheit (4) zur Einstellung der Fahrtrichtungen durch Einstellung der mechanischen Kopplung bereitgestellt wird.

2. Vorrichtung nach Anspruch 1, **dadurch gekennzeichnet, dass** das Ausgangssignal der Auswertungseinheit (4) einer Anzeigeeinheit (5) zugeführt und dort angezeigt wird.

3. Vorrichtung nach Anspruch 1 oder 2,
**dadurch gekennzeichnet, dass** das Ausgangssignal der Auswertungseinheit (4) einer automatischen Einstelleinheit (6) zugeführt wird, die in Wirkverbindung mit Einstellmitteln (3) der Kopplung der Fahrtrichtungen (SA1, $\delta$A2) der beiden lenkbaren Achsen (A1, A2) relativ zueinander steht, wobei die automatische Einstelleinheit (6) so konfiguriert ist, dass diese abhängig von dem Ausgangssignal der Auswertungseinheit (4) so auf die Einstellmittel (3) einwirkt, dass die Differenz $\Delta$ oder der diese Differenz $\Delta$ repräsentierende Parameter Null wird.

4. Vorrichtung nach einem der Ansprüche 1 bis 3,
**dadurch gekennzeichnet, dass** die Vorrichtung weiterhin eine Messeinrichtung (204) aufweist zur Erfassung der Stellung des Lenkrades (203) mit einem Lenkradwinkel ($\Omega$), dass weiterhin eine Messvorrichtung (201) vorhanden ist zur Erfassung der Fahrtrichtung ($\delta$A1) wenigstens einer lenkbaren Achse (A1) eines Fahrzeugs, dass von der Messeinrichtung (204) ein entsprechendes Signal einer Auswertungseinrichtung (205) zugeführt wird, dass der Auswertungseinrichtung (205) weiterhin von der Messvorrichtung (201) ein die Fahrtrichtung (SA1) der wenigstens einen lenkbaren Achse (A1) repräsentierendes Signal zugeführt wird, dass die Auswertungseinrichtung (205) so eingerichtet ist, dass diese aus den zugeführten Signalen der Messeinrichtung (204) und der Messvorrichtung (201) unter Berücksichtigung der Lenkübersetzung (LÜb) des Fahrzeuges einen Parameter (206) ermittelt und ausgibt, der einem Winkel ($\Delta\Omega$) entspricht, um den das Lenkrad (203) bei den vorliegenden Verhältnissen gegenüber der Lenkstange verdreht werden muss, damit bei vollständig justiertem Lenkrad (203) bei der Fahrtrichtung (SA1) der lenkbaren Achse von Null auch der Lenkradwinkel ($\Omega$) gleich Null ist.

5. Verfahren zur Messung und Ermittlung relevanter Parameter für die Einstellung der Fahrtrichtungen ($\delta$A1, $\delta$A2) zweier lenkbarer Achsen (A1, A2) eines Fahrzeugs relativ zueinander, wobei die Einstellung der Fahrtrichtungen ($\delta$A1, $\delta$A2) der beiden lenkbaren Achsen (A1, A2) Bestandteil der Fahrwerkeinstellung des Fahrzeugs ist und wobei die beiden lenkbaren Achsen (A1, A2) mechanisch über eine mechanische Kopplung miteinander gekoppelt sind,
**dadurch gekennzeichnet, dass** die Einstellung der Fahrtrichtungen (SA1, $\delta$A2) der beiden lenkbaren Achsen (A1, A2) relativ zueinander mit jeweils nur einer Messeinheit (1, 2) pro Fahrzeugseite vorgenommen wird, indem die Differenz ($\Delta$) der Fahrtrichtungen (SA1, $\delta$A2) der beiden lenkbaren Achsen (A1, A2) oder ein diese Differenz ($\Delta$) repräsentierender Parameter ermittelt wird aus einer Messung des Spurwinkels (SpA1$_{links}$) des linken Rades einer ersten Achse (A1) und der Messung des Spurwinkels (SpA2$_{rechts}$) des rechten Rades der zweiten Achse (A2), wobei die Einstellung der Fahrtrichtungen (SA1, $\delta$A2) der beiden lenkbaren Achsen (A1, A2) relativ zueinander durch Einstellung der mechanischen Kopplung so vorgenommen wird, dass die Differenz ($\Delta$) oder der diese Differenz ($\Delta$) repräsentierende Parameter betragsmäßig kleiner wird als ein Schwellwert.

6. Verfahren nach Anspruch 5,
**dadurch gekennzeichnet, dass** weiterhin die Stellung des Lenkrades (203) mit einem Lenkradwinkel ($\Omega$) erfasst wird, dass weiterhin die Fahrtrichtung (SA1) wenigstens einer lenkbaren Achse (A1) des Fahrzeugs erfasst wird, dass aus der Stellung des Lenkrades (203), der erfassten Fahrtrichtung ($\delta$A1), sowie der Lenkübersetzung (LÜb) des Fahrzeugs ein Parameter (206) ermittelt und ausgeben wird, der einem Winkel ($\Delta\Omega$) entspricht, um den das Lenkrad (203) bei den vorliegenden Verhältnissen gegenüber der Lenkstange verdreht werden muss, damit bei vollständig justiertem Lenkrad (203) bei der Fahrtrichtung (SA1) der lenkbaren Achse von Null auch der Lenkradwinkel ($\Omega$) gleich Null ist.

**Claims**

1. A device for measuring and determining relevant parameters for adjusting the direction of travel ($\delta$A1, $\delta$A2) of two steerable axles (A1, A2) of a vehicle relative to each other, whereby the adjustment of the direction of travel ($\delta$A1, $\delta$A2) of both steerable axles (A1, A2) is part of the adjustment of the parameters of the chassis alignment of the car and whereby the both steerable axles (A1, A2) are coupled mechanically,
**characterized in that** only one measuring unit (1, 2) for measuring the individual toe angle (SpA1$_{links}$, SpA2$_{rechts}$) of a wheel associated with said measuring unit (1, 2) is present on each side of the vehicle in such a way that a first measuring unit (1) is assigned to the wheel of the of the steerable axles (A1, A2) on the vehicle's left hand side and that a second measuring unit (2) is assigned to the wheel of the second of the steerable axles (A2, A1) on the vehicle's right hand side, the output signals of the measuring units (1, 2 ) are fed to an evaluation unit (4), the difference $\Delta$ in the direction of travel ($\delta$A1, $\delta$A2) of the two steerable axles (A1, A2), or a parameter representing this difference $\Delta$, being determined in a evaluating unit (4) form the signals supplied form the measuring units (1, 2) and being provided as an output signal the evaluating unit (4) for setting the directions of travel by adjusting the mechanical coupling.

2. The device of claim 1, **characterized in that** the output signal from the evaluating unit (4) is supplied to a visual display unit (5) and displayed there.

3. The device according to claim 1 or 2, **characterized in that** the output signal form the evaluating unit (4) is supplied to an automatic adjusting unit (6) that interacts operatively with adjusting means (3) of the coupling of the directions of travel ($\delta$A1, $\delta$A2) of the two steerable axles (A1, A2) relative to each other, the automatic adjusting unit (6) being configured such that it acts on the adjusting means (3), as a function of the output signal from the evaluating unit (4), in such a way that the difference $\Delta$, or the parameter representing this difference $\Delta$, becomes zero.

4. The device according to claim 1 to 3, **characterized in that** the device also has a measuring system (204) for registering the position of the steering wheel (203) with a steering-wheel angle ($\Omega$), that, in addition, a measuring device (201) is provided for measuring the direction of travel ($\delta$A1) of at least one of a vehicle's steerable axles (A1), that a corresponding signal is supplied from the measuring system (204) to an evaluating system (205), that the evaluating system (205) is also supplied, from the measuring device (201), with a signal representing the direction of travel ($\delta$A1) of the at least one steerable axle (A1), that the evaluating system (205) is set up in such a way that, from the signals supplied to it from the measuring system (204) and the measuring device (201), taking the vehicle's steering wheel gear ratio (LUb) into account, it determines and outputs a parameter (206) corresponding to an angle ($\Delta\Omega$) by which, under the existing circumstances, the steering wheel (203) must be rotated relative to the steering column in order that, once the steering wheel (203) has been fully adjusted, the steering wheel angle ($\Omega$) is zero when the direction of travel ($\delta$A1) of the steerable axle is zero.

5. A method for measuring and determining relevant parameters for adjusting the directions of travel ($\delta$A1, $\delta$A2) of two steerable axles (A1, A2) of a vehicle relative to each other, whereby the adjustment of the direction of travel ($\delta$A1, $\delta$A2) of both steerable axles (A1, A2) is part of the adjustment of the parameters of the chassis alignment of the car and whereby the both steerable axles (A1, A2) are coupled mechanically,
**characterized in that** that the directions of travel ($\delta$A1, $\delta$A2) of the two steerable axles (A1, A2) are adjusted relative to each other by means of only one measuring unit (1, 2) per vehicle side by determining the difference ($\Delta$) in the directions of travel ($\delta$A1, $\delta$A2) of the two steerable axles (A1, A2), or a parameter representing this difference ($\Delta$), from a measurement of the toe angle (SpA1$_{links}$) of the left-hand wheel of a first axle (A1) and the measurement of the toe angle (SpA2$_{rechts}$) of the right-hand wheel of the second axle (A2), mutual alignment of the directions of travel ($\delta$A1, $\delta$A2) of the two steerable axles (A1, A2) being performed in such a way by adjusting the mechanical coupling that the difference ($\Delta$), or the parameter representing this difference ($\Delta$), becomes a smaller absolute value than a threshold value.

6. The method according to claim 5, **characterized in that**, in addition, the position of the steering wheel (203) with a steering-wheel angle ($\Omega$) is registered, that the direction of travel ($\delta$A1) of at least one of the vehicle's steerable axles (A1) is measured and that, from the position of the steering wheel (203), the measured direction of travel ($\delta$A1) and the vehicle's steering-wheel gear ratio (LUb), a parameter (206) is determined and output that corresponds to an angle ($\Delta\Omega$) by which, under the existing circumstances, the steering wheel (203) must be rotated relative to the steering column in order that, once the steering wheel (203) has been fully adjusted, the steering-wheel angle (Q) is zero when the direction of travel ($\delta$A1) of the steerable axle is zero.

**Revendications**

1. Dispositif de mesure et de détermination de paramètres pertinents pour le réglage des directions de déplacement ($\delta$A1, $\delta$A2) de deux essieux directeurs (A1, A2) d'un véhicule l'un par rapport à l'autre, le réglage des directions de déplacement ($\delta$A1, $\delta$A2) des deux essieux directeurs (A1, A2) faisant partie du réglage du châssis du véhicule et selon lequel les deux essieux directeurs (A1, A2) sont mécaniquement couplés l'un à l'autre par l'intermédiaire d'un accouplement mécanique
**caractérisé en ce que**, de chaque côté du véhicule, une seule unité de mesure (1, 2) pour mesurer l'angle de pincement individuel (SpA1$_{gauche}$, SpA2$_{droite}$) d'une roue associée à cette unité de mesure (1, 2) est prévue de telle sorte qu'une première unité de mesure (1) est associée à la roue du premier des essieux directeurs (A1, A2) du côté gauche du véhicule et de telle sorte que la deuxième unité de mesure (2) est associée à la roue du deuxième des essieux directeurs (A2, A1) du côté droit du véhicule, et dans lequel les signaux de sortie des unités de mesure (1, 2) sont transmis à une unité d'évaluation (4), selon lequel l'unité d'évaluation (4) détermine, à partir des signaux fournis par les unités de mesure (1, 2), la différence $\Delta$ entre les directions de déplacement ($\delta$A1, $\delta$A2) des deux essieux directeurs (A1, A2) ou un paramètre représentant cette différence $\Delta$, et le met à disposition en tant que signal de sortie de l'unité d'évaluation (4) pour le réglage des directions de déplacement par le réglage de l'accouplement mécanique.

2. Dispositif selon la revendication 1,
   **caractérisé en ce que** le signal de sortie de l'unité d'évaluation (4) est transmis à une unité d'affichage (5) et y est affiché.

3. Dispositif selon la revendication 1 ou 2,
   **caractérisé en ce que** le signal de sortie de l'unité d'évaluation (4) est amené à une unité de réglage automatique (6) qui est en relation opérationnelle avec des moyens de réglage (3) du couplage des direction de déplacement ($\delta$A1, $\delta$A2) des deux essieux directeurs (A1, A2) l'un par rapport à l'autre, selon lequel l'unité de réglage automatique (6) est configurée de telle sorte qu'elle agit sur les moyens de réglage (3) en fonction du signal de sortie de l'unité d'évaluation (4) de telle sorte que la différence $\Delta$ ou le paramètre représentant cette différence $\Delta$ devienne nul.

4. Dispositif selon l'une des revendications 1 à 3,
   **caractérisé en ce que** le dispositif comprend en outre un dispositif de mesure (204) pour détecter la position du volant (203) avec un angle de volant ($\Omega$), **en ce qu'**il existe en outre un dispositif de mesure (201) pour détecter le direction de déplacement ($\delta$A1) d'au moins un essieu directeur (A1) d'un véhicule, **en ce qu'**un signal correspondant est transmis du dispositif de mesure (204) à un dispositif d'évaluation (205), **en ce que** le dispositif d'évaluation (205) est en outre alimenté par le dispositif de mesure (201) avec un signal représentant le direction de déplacement ($\delta$A1) de l'au moins un essieu directeur (A1), **en ce que** le dispositif d'évaluation (205) est conçu de telle sorte qu'il détermine et émet, à partir des signaux fournis par le dispositif de mesure (204) et le dispositif de mesure (201), en tenant compte du rapport de direction (LÜb) du véhicule, un paramètre (206) qui correspond à un angle ($\Delta\Omega$) auquel le volant (203) doit être tourné par rapport à la barre de direction dans les conditions actuelles, de sorte que, lorsque le volant (203) est entièrement réglé, le direction de déplacement ($\delta$A1) de l'essieu directeur étant nul, l'angle du volant ($\Omega$) est également nul.

5. Procédé de mesure et de détermination de paramètres pertinents pour le réglage des directions de déplacement ($\delta$A1, $\delta$A2) de deux essieux directeurs (A1, A2) d'un véhicule l'un par rapport à l'autre, dans lequel le réglage des directions de déplacement ($\delta$A1, $\delta$A2) des deux essieux directeurs (A1, A2) fait partie du réglage du châssis du véhicule et dans lequel les deux essieux directeurs (A1, A2) sont couplés mécaniquement l'un à l'autre par un accouplement mécanique,
   **caractérisé en ce que** le réglage des direction de déplacement ($\delta$A1, $\delta$A2) des deux essieux directeurs (A1, A2) l'un par rapport à l'autre est effectué avec respectivement une seule unité de mesure (1, 2) par côté de véhicule, **en ce que** la différence ($\Delta$) des directions de déplacement ($\delta$A1, $\delta$A2) des deux essieux directeurs (A1, A2) ou un paramètre représentant cette différence ($\Delta$) est déterminé à partir d'une mesure de l'angle de pincement (SpA1$_{gauche}$) de la roue gauche d'un premier essieu (A1) et de la mesure de l'angle de pincement (SpA2$_{droite}$) de la roue droite du deuxième essieu (A2), dans lequel le réglage des directions de déplacement (A1, A2) des deux essieux directeurs (A1, A2) l'un par rapport à l'autre est effectué en réglant l'accouplement mécanique de sorte que la différence ($\Delta$) ou le paramètre représentant cette différence ($\Delta$) devienne inférieur à une valeur de seuil.

6. Procédé selon la revendication 5,
   **caractérisé en ce qu'**en outre la position du volant (203) est détectée avec un angle de volant ($\Omega$), **en ce qu'**en outre le direction de déplacement ($\delta$A1) d'au moins un essieu directeur (A1) du véhicule est détecté, **en ce qu'**un paramètre (206) correspondant à un angle ($\Delta\Omega$) auquel le volant (203) doit être tourné par rapport à la barre de direction dans les conditions actuelles est déterminé et délivré à partir de la position du volant (203), la direction de déplacement ($\delta$A1) détectée, et le rapport de direction (LÜb) du véhicule, , de sorte que, lorsque le volant (203) est entièrement réglé et que la direction de déplacement ($\delta$A1) de l'essieu directeur est nulle, l'angle du volant ($\Omega$) est également nul.

Fig. 1

Fig. 2

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102008045307 A1
- DE 102005042446 B3
- DE 102006036671 A1
- US 7864309 B2
- US 5675515 A
- EP 895056 A2
- US 5143400 A
- US 5417299 A